# EUROPEAN PATENT SPECIFICATION

(11) **EP 4 177 419 B1**
(45) Date of publication and mention of the grant of the patent: **10.09.2025**
(21) Application number: 22205223.5
(22) Date of filing: 03.11.2022
(51) Int. Cl.: E04G 15/06, E04B 1/00, E04B 5/48, F16L 5/02, F16L 41/02, F16L 55/115

(54) **TUBE FITTING ASSEMBLY AND METHOD OF ADAPTING A TUBE FITTING**
ROHRVERBINDUNGSANORDNUNG UND VERFAHREN ZUR ANPASSUNG EINER ROHRVERBINDUNG
ENSEMBLE DE RACCORD DE TUBE ET PROCÉDÉ D'ADAPTATION D'UN RACCORD DE TUBE

(30) Priority: 03.11.2021 NL 2029626
(43) Date of publication of application: 10.05.2023
(73) Proprietor: Dyka B.V., 8331 LJ Steenwijk (NL)
(72) Inventor: Van der Bilt, Casper, 8331 LJ Steenwijk (NL)
(74) Representative: Arnold & Siedsma

(56) References cited:
- EP-A1- 3 543 429
- EP-B1- 2 711 474
- CA-C- 2 638 143
- DE-U1- 202014 000 524
- KR-U- 20190 002 678
- US-A- 5 104 150
- US-A- 5 560 163
- US-A- 5 689 921
- US-A1- 2004 104 498

## Description

The present invention relates to a method of adapting a tube fitting to a poured concrete floor. The invention further relates to a tube fitting assembly.

Many building structures have concrete flooring in which tube systems for ventilation or water, soil and/or waste discharge are installed. The tube system often comprises a tube fitting, such as a tee, coupled to tubes of the tube system to form in the tube system a passage through the concrete floor, i.e. from the space above the floor to the space below the floor. Such tube fittings usually conform to a specific standard, such as DIN or NEN. For example, NEN-EN 1451-1 specifies dimensional and structural requirements for tubes, pipes and fittings.

During construction, tube systems to be installed in concrete floors are usually placed prior to pouring the concrete. After pouring the concrete floor, a connection end of the tube fitting installed in the concrete floor should be accessible for coupling the connection end to tubes from outside the concrete. The thickness of the concrete floor is thus often limited by the standard height dimension of the tube fitting for forming the passage through the concrete floor, since the tube fitting would be otherwise fully submerged by overflowing concrete.

Nonetheless, concrete floor thicknesses can vary a lot. To illustrate, a concrete floor may be as thick as the height of the tube fitting up to twice the height of the tube fitting. Providing a plurality of different sized tube fittings to accommodate the variation in floor thickness would however require a plurality of moulds, which is not attractive due to the costs involved with manufacturing a single mould. Alternatively prior to pouring a concrete floor that is thicker than the height of the tube fitting to be installed therein, a tube segment may be secured to the tube fitting as an extension part thereof, for example using tape or a compression band or the like, which requires many preparation steps and, in many cases, further adjustment at the construction site, particularly in case a mistake was made when specifying the floor thickness. The adjustment is made at the construction site by, for instance, applying a polyurethane foam to the top of the extension part. After pouring the concrete floor and the concrete has hardened, the connection end of the embedded tube fitting is to be cleared again in order to couple a tube of the tube system to the tube fitting. The applied foam and/or extension part is often to be removed manually, which is time-consuming and results in waste that cannot be separated or recycled properly. US 2004/104498 Al discloses a method of adapting a tube fitting to a poured concrete floor and US 5689921 A discloses a tube fitting assembly for use in a tube system extending through a concrete floor.

It is therefore a goal of the present invention to efficiently adapt a tube fitting to different thicknesses of concrete floors that exceed the height of the tube fitting.

Thereto a method of adapting a tube fitting to a poured concrete floor as defined in appended claim 1 is provided, wherein the method comprises the step of providing a tube fitting assembly comprising a tube fitting and a tubular cover arranged to coaxially attach to the tube fitting. The method further comprises the step of providing the poured concrete floor, wherein the tube fitting and the tubular cover are installed therein, and wherein the tubular cover axially extends from the tube fitting through a surface of the concrete floor. That is, a longitudinal axis of the tubular cover is preferably aligned with a flow path of the tube fitting when the tubular cover is attached thereto. The method further comprises the step of adjusting a height of the tubular cover on the basis of a thickness of the concrete floor subsequent to the step of providing the poured concrete floor.

While the concrete is being poured, the tubular cover extending upwards from the tube fitting can prevent concrete reaching above the tube fitting from overflowing into the tube fitting, thereby keeping the tube fitting free from concrete. This way, a tube of a tube system can be conveniently coupled directly to the tube fitting, i.e. without the time-consuming removal of e.g. foam or concrete after the concrete floor has been poured, even if the floor thickness exceeds the height of the tube fitting.

The tubular cover therewith allows the tube fitting to both conform to the required standard and be installed in a concrete floor which has a thickness exceeding the standard height of the tube fitting. In other words, the tube fitting would not have to be customised to fit in a concrete floor of a specific thickness, since the tubular cover can enable tube fittings with the same height to be installed in floors of varying thicknesses. Moreover, even if the tube fitting is customised for a specific floor thickness, the tubular cover can be used in case a mistake was made when specifying the floor thickness or when customising the tube fitting.

By adjusting the height of the tubular cover on the basis of the thickness of the concrete floor, which may be a predetermined or expected thickness, it can be ensured that, all the while the concrete is being poured, the tubular cover extends beyond, or at least as far as, a predetermined or expected height of the surface of the floor. This way, the tubular cover itself, and therefore the tube fitting, can be kept free from concrete.

If the height of the tubular cover is adjusted after pouring the concrete floor, adjustment mistakes can be prevented, since the tubular cover is adjusted to a concrete floor that is already poured. In other words, the tubular cover, particularly the height thereof, is preferably oversized, initially, such that the tubular cover can keep the tube fitting free from concrete even if a thicker floor is poured than initially expected or specified. After pouring the floor, the oversized tubular cover can be accurately adjusted to the actual thickness of the floor.

Instead of adjusting the tubular cover after pouring the concrete, the tubular cover may be adjusted at the construction site prior to pouring the concrete or manufactured on the basis of the predetermined or expected thickness of the concrete floor. The tubular cover may thus be customised beforehand such that adjustment after pouring may not be required.

The step of adjusting the height of the tubular cover preferably comprises the step of removing a segment of the tubular cover. This way, the tubular cover can be conveniently adjusted, for example using a commonly used cutting tool. Moreover, the number of waste objects can be limited such that only the removed segment is to be disposed and little waste separation is required. Alternatively, the height of the tubular cover may e.g. be adjusted telescopically, wherein the segment is removed by sliding the segment into or onto a lower segment of the tubular cover.

Preferably, the segment of the tubular cover is a segment protruding beyond the poured concrete floor, preferably at least 5 centimetres, more preferably at least 10 centimetres. By removing a segment of the tubular cover protruding beyond the floor, it can be ensured that the tubular cover is flush with the surface of the poured floor, regardless of the difference between the expected and actual thickness of the floor. Furthermore, removing an excess segment, which may otherwise form an obstruction to further plumbing or construction work, may for instance facilitate coupling a tube of the tube system to the tube fitting.

The method preferably further comprises the step of providing formwork for the concrete floor and optionally reinforcement material, wherein the step of providing the tube fitting assembly preferably comprises the step of positioning the tube fitting on the formwork and/or reinforcement material. The step of providing the poured concrete floor then preferably comprises pouring concrete into the formwork, subsequent to the step of providing the tube fitting assembly.

Preferably, the step of positioning the tube fitting on the formwork comprises securing the tube fitting to the formwork and/or reinforcement material. This can prevent the tube fitting from floating on the concrete, as a result of the buoyant force exerted by the concrete, once the concrete is being poured.

The tube fitting may be secured to the concrete floor reinforcement by means of fasteners such as cable ties. Alternatively or additionally, the tube fitting may be secured to the formwork by means of a bracket, nuts and a bolt or a threaded rod. For instance, the threaded rod may extend through the tube fitting and the formwork. On one end, a nut may secure the threaded rod to the formwork below the tube fitting while, on the other end, the threaded rod may be secured to the tube fitting by the bracket resting and pressing on the tube fitting. This way, the bracket can press the tube fitting down against the formwork to oppose an upward buoyant force of the concrete. Alternatively, a bolt may extend through the tube fitting and the formwork, wherein the bolt is secured to the formwork below the tube fitting on one end and, on the other end, to the tube fitting by the bracket resting and pressing on the tube fitting.

The method preferably further comprises the steps of inserting a tube into the tubular cover and coupling the inserted tube to the tube fitting. Thus, the tubular cover may for instance remain attached to the tube fitting after pouring the concrete floor to reduce the number of actions required to integrate the tube fitting into the tube system. It is then preferred if the tube, extending through the tubular cover after insertion therein, can be coupled directly to the tube fitting, i.e. without interposed joint parts or pipe segments or the like.

The tubular cover and the tube fitting comprise mutually cooperating connection means arranged to attach the tubular cover to the tube fitting, wherein the step of providing the tube fitting assembly comprises attaching the tubular cover to the tube fitting using the connection means. Using the mutually cooperating connection means on the tubular cover and on the tube fitting, as opposed to using additional connection means such as tape, the tubular cover can be conveniently attached to the tube fitting in a time-efficient manner, preferably with a single action, e.g. by means of a snap-fit.

Preferably, the tubular cover comprises a closed end. This prevents any concrete entering the tube fitting when pouring said concrete. The step of adjusting the height of the tubular cover then preferably comprises the step of removing the segment of the tubular cover comprising the closed end.

Preferably, the tubular cover is monolithic. A single, unitary tubular cover, preferably including a closed end as described above, can then efficiently be coupled to the tube fitting.

Preferably, the tubular cover has a wall thickness of 0,5 - 3,0 mm. More preferably, the tubular cover is manufactured from a material chosen from the group consisting of polyethylene (PE), polypropylene (PP), polyvinyl chloride (PVC) and polyethylene terephthalate (PET), or a combination thereof. Most preferably, the material and/or the wall thickness of the tubular cover are chosen such that the segment of the tubular cover can be removed easily, for instance using only a knife.

According to a further aspect as defined in claim 8, a tube fitting assembly for use in a tube system extending through a concrete floor is provided. The tube fitting assembly comprises a tube fitting, comprising a connection end for coupling to a tube of the tube system. The tube fitting assembly further comprises a tubular cover, coaxially arranged around the connection end and arranged to axially extend from the connection end in a direction away from the tube fitting, wherein the tubular cover and the tube fitting comprise mutually cooperating connection means arranged to attach the tubular cover to the tube fitting.

The tubular cover can keep the tube fitting, in particular the connection end thereof, free from concrete while the concrete is being poured. This way, a tube of a tube system can be conveniently coupled to the tube fitting, i.e. without the time-consuming removal of e.g. foam or concrete.

Preferably, the tubular cover has an open end facing the tube fitting when the tubular cover is connected thereto, such that a tube can be inserted into the tubular cover and directly coupled to the tube fitting.

As described above, the mutually cooperating connection means of the tubular cover and the tube fitting enable the tubular cover to be conveniently attached to the tube fitting in a time-efficient manner, e.g. by means of a snap-fit.

Furthermore, the tube fitting assembly may be installed in a poured concrete floor. It is then preferred if the tubular cover extends, from the tube fitting, through the surface of the concrete floor.

According to a preferred embodiment, an inner diameter of the tubular cover exceeds an inner diameter of the tube fitting. Preferably, the smallest inner diameter of the tubular cover, more preferably in at least the lower half of the tubular cover, exceeds the smallest inner diameter of the connection end of the tube fitting. This can ensure that a tube to be coupled to the tube fitting can be inserted into the tubular cover and, extending through the tubular cover, be coupled to the tube fitting after pouring the concrete floor, which allows the tubular cover to remain attached to the tube fitting. In other words, it is preferred that a passage is defined by the hollow tubular cover, which passage allows a tube to be received in the tubular cover in order to be coupled to the tube fitting, preferably without the tube contacting the tubular cover.

Particularly when the inner diameter of the tubular cover exceeds the inner diameter of the tube fitting, as described above, it is preferred if the connection means are arranged to attach the tubular cover to an exterior of the connection end of the tube fitting. This can simplify the attachment of the tubular cover to the tube fitting and thereby the configuration of the assembly.

It is then further preferred if the connection means of the tubular cover comprise a sealing region formed by a reduction of an inner diameter of the tubular cover, as seen along a longitudinal axis of the tubular cover, wherein the sealing region is arranged to abut the exterior, or exterior region, of the connection end, preferably circumferentially around the connection end, thereby providing a sealing between the tubular cover and the tube fitting, in particular the connection end thereof. The exterior region may comprise the flange of the connection end. The sealing can then prevent the concrete from entering the tubular cover and/or the tube fitting while the floor is being poured.

Furthermore, as a result of the reduction of the inner diameter of the tubular cover, the tubular cover, in particular the sealing region, may clamp around the exterior of the connection end to fix the tubular cover to the tube fitting, thereby possibly forming an annular snap-fit. Such a connection may prevent the tubular cover, as a result of the buoyant force exerted by concrete once the concrete is being poured, from detaching from the tube fitting.

The connection means comprise mutually interlocking parts. One or more parts provided on the tubular cover are then arranged to interlock with one or more parts provided on the tube fitting to simplify connecting the tubular cover to the tube fitting. For instance, the mutually interlocking parts may be arranged to enable an annular snap-fit when the tubular cover is placed coaxially onto the tube fitting, although other fastening mechanisms, not covered by the present invention, can be envisaged, such as a bayonet mount.

Preferably, the tubular cover has a plurality of resilient elements arranged circumferentially around the open end of the tubular cover such that, when pushing the mutually interlocking parts of the tubular cover and the tube fitting together, the resilient elements of the tubular cover can be deflected, thereby allowing the tubular cover to move into a locked position in which a protruding edge of the resilient element is secured by the cooperating connection means of the tube fitting, thereby locking the tubular cover onto the tube fitting.

Specifically, to prevent the tubular cover from detaching from the tube fitting as a result of the buoyant force exerted by concrete, the cooperating connection means are preferably configured for withstanding an axial tensile force of at least 50 N, preferably at least 100 N, more preferably at least 200 N. The axial tensile force can be defined as a force along the longitudinal axis of the tubular cover such that, when the tubular cover is attached to the tube fitting in an upward position, the upward force on the tubular cover, resulting from pouring the concrete, results in the axial tensile force on the mutually cooperating connection means.

The connection means of the tube fitting comprise a flange, wherein the connection means of the tubular cover comprise a locking part arranged to engage the flange. In case the connection end of the tube fitting is a socket end having an interior for fittingly connecting with a spigot end of the tube of the tube system, the socket end of the tube fitting is preferably provided with an annular groove, or other diameter step, along the interior. Such a groove is commonly provided with a sealing ring for sealing the tube coupling. It is preferred if the annular groove defines the flange, such that, in other words, the connection means of the tube fitting are formed by a commonly present structure in standard tube fittings. This way, many tube fittings conforming to a standard can be used in the tube fitting assembly.

The tubular cover comprises a tubular section, defining a longitudinal axis of the tubular cover, and connection means, preferably provided at an open end of the tubular section, for coaxially attaching the tubular cover to cooperating connection means of the tube fitting.

The tubular cover can keep the tube fitting assembly free from concrete while the concrete is being poured. Since the tubular cover may not be a fluid conveying tube of the tube system, the tubular cover may have fewer structural or quality requirements. The tubular cover may therefore be material-efficient and/or composed of a relatively low-cost and/or recyclable material. For instance, the tubular cover may be made of polyethylene or a similar material. Moreover, the tubular cover may be manufactured in an efficient manner. For instance, the tubular cover may be moulded, for example by blow or injection moulding.

Furthermore, by providing the connection means at the open end of the tubular section, the length of the tubular cover is effectively used to extend the height of the tube fitting assembly, i.e. the combined height of the tube fitting and the tubular cover attached thereto.

The one or more locking parts on the tubular cover are arranged circumferentially around the open end for engaging the flange of the tube fitting. The locking parts are, with respect to the longitudinal axis of the tubular cover, radially movable to facilitate attaching the tubular cover to the tube fitting, particularly when the locking parts are independently movable.

Additionally, the connection means of the tubular cover preferably comprise a sealing region formed by a reduction of an inner diameter of the tubular cover, as seen along the longitudinal axis.

Removing an excess segment of the tubular cover, which may otherwise form an obstruction to further plumbing or construction work, may for instance facilitate insertion of a tube into the tubular cover. According to a preferred embodiment, the tubular section therefore comprises a disposable end opposite to the open end. This allows an excess segment, the disposable end, to be removed in an efficient manner. As such, only the removed segment is to be disposed and little waste separation is required.

Preferably, the tubular cover is closed at the disposable end. The closure may be formed by a plate-like member. The tubular cover being closed prevents waste or concrete from entering the tube fitting assembly. Once a tube is to be coupled to the tube fitting, the closing part of the tubular cover can be disposed to allow the coupling of the tube.

The invention is further elucidated on the basis of the appended drawings, wherein:
- figure 1 is a cross-sectional view of a tube fitting assembly installed in a poured concrete floor;
- figure 2 is an exploded view of the tube fitting assembly;
- figures 3 and 4 show alternative embodiments of the tubular cover;
- figure 5 is a cross-sectional view of a tube fitting assembly with a pipe coupled.

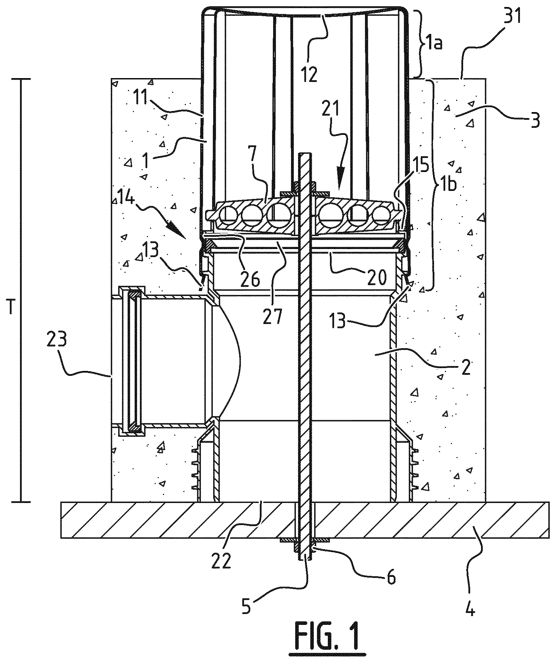

The installation of a part of a tube system in a concrete floor can be illustrated with reference to figure 1.

First, formwork 4 for the concrete floor is provided and positioned directly under a predetermined position for the concrete floor. The formwork 4 is a mould for concrete that may include a plywood plate or panel for concrete-forming.

Second, the part of the tube system that is to be installed in the concrete floor is provided, of which a tee fitting 2 is shown. The tee 2 has three openings 21, 22, 23 for exchanging fluid with a tube or other tube system part coupled to the tee 2, wherein a first opening 21 and a second opening 22 are arranged to form a passage from the space above the concrete floor to the space below the concrete floor. The tee 2 comprises a socket 20 having an interior for fittingly coupling to a spigot end of a tube of the tube system, wherein the first opening 21 is provided in the socket 20. A third opening 23 is orientated traverse to the passage between the first and second openings 21, 22 to form a further fluid channel through the concrete floor in cooperation with another tube system part (not shown) coupled to the tee 2. The tee 2, together with the tube system part coupled thereto, is positioned on the formwork 4, preferably in a predetermined position. Then, the tee 2 is secured to the formwork 4, as exemplified below. Alternatively, the tee 2 or the part coupled thereto may be secured to reinforcement for the concrete.

To secure the tee 2 to the formwork 4, a threaded rod 5 is provided in the tee 2, extending through the first opening 21 and the second opening 22 thereof, and extending through a fastening hole 40 in the formwork 4. Below the formwork 4, i.e. opposite to the tee 2, a nut 6 secures the threaded rod 5 with respect to the formwork 4 below the tee 2. At its other end, the threaded rod 5 is secured to the tee 2 via a bracket 7 resting and pressing on an upper surface of the tee 2, adjacent the first opening 21. Instead of a tee, a different tube fitting of a tube system may be installed in the concrete floor, including for example tubes and couplings.

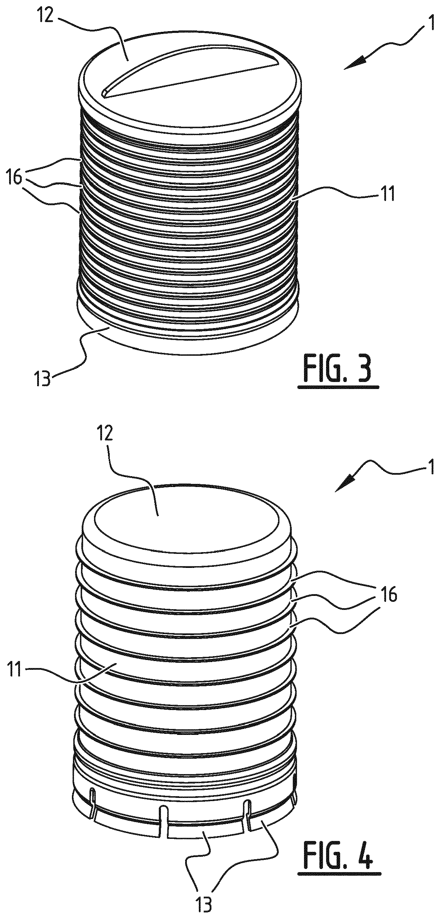

In a third step, a cap 1 is provided. The cap 1 has a tubular section 11, defining a longitudinal axis A of the cap 1. At one end of the tubular section 11, the cap 1 is closed by a plate-like closing member 12 while, opposite thereof, the cap 1 has an opening 10. At the open end, the cap 1 comprises a plurality of locking parts 13 arranged circumferentially, with respect to the longitudinal axis A, around the opening 10. The locking parts 13 are resiliently movable in a radial direction with respect to the longitudinal axis A, to facilitate placing the cap 1 over the socket 20 of the tee 2, such that the locking parts 13 can coaxially attach the cap 1 to the tee 2. That is, the longitudinal axis A of the cap 1 is aligned with the direction of the passage between the first opening 21 and the second opening 22 when the cap 1 is attached to the tee 2. Alternatively, the locking part may be formed as an integral part (see figure 3), as opposed to independently movable parts.

Each locking part 13 preferably has a first engagement surface arranged to engage, when pushing the cap 1 onto the tee 2, an edge of the tee 2, such as a rim or a flange, for radially moving the locking part 13 to allow placement of the cap 1 onto the tee 2. The first engagement surface is then preferably orientated at an (acute) angle, preferably between 0 and 45 degrees, with respect to the longitudinal axis A such that the locking part 1 can be pressed over the edge of the tee 2 in a relatively easy manner, i.e. with relatively little force. In addition, each locking part 13 preferably has a second engagement surface arranged to rest against or engage, once the cap 1 is placed onto the tee 2, the edge of the tee 2 so as to resist removal of the cap 1 from the tee 2. Preferably, the second engagement surface is orientated at an angle relative to the longitudinal axis A, preferably between 45 and 90 degrees, such that the axial force on the cap 1 that is required to radially move the locking part 13 for allowing removal of the cap 1, is greater than the force required during assembly in the opposite direction. By adjusting the angles and the overlap, i.e. the interface between the respective engagement surface and the edge of the tee 2, the interplay of forces can be optimised.

Further shown is that the cap 1, specifically the tubular section 11, has a reduced inner diameter at a location adjacent the opening 10, thereby forming a sealing region 14 that is arranged to circumferentially seal the exterior of the socket 20, in particular a circumferential rim or flange 24 provided thereon. An additional gasket (not shown) may be included in the cap 1 for sealing purposes.

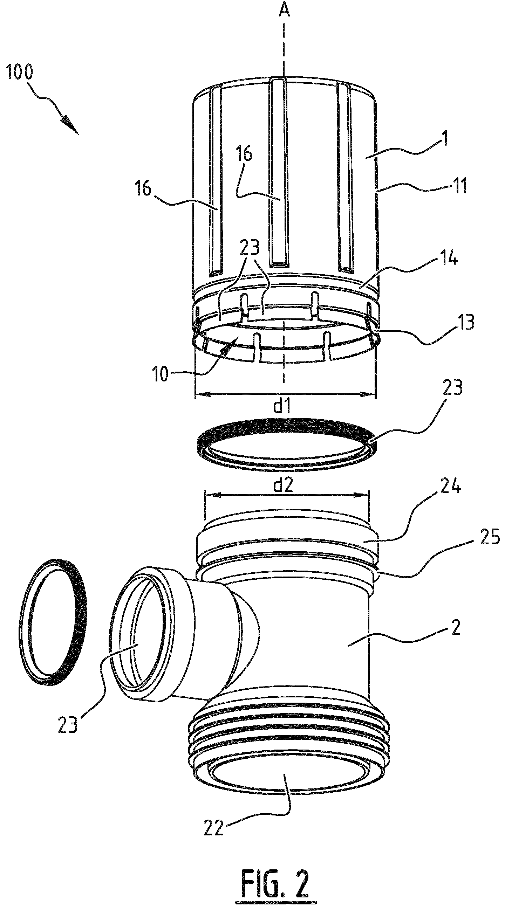

When the cap 1 is placed over the socket 20, the locking parts 13 or, more specifically, the respective second engagement surfaces engage a flange 25 of the socket 20 in a mutually interlocking manner to fixedly mount the cap 1 onto the tee 2 to form an assembly 100, of which an exploded view is shown in figure 2. As can be seen in figure 1, the mounted cap 1, particularly the tubular section 11, extends from the socket 20 upwards along the longitudinal axis A of the cap 1. The cap 1 comprises an end stop 15, such as a bumper or rib or the like, arranged in the tubular section 11 to prevent the cap 1 from being placed on or over the tee 2 too far relative thereto, such that the cap 1 extends sufficiently high. The end stop 15 is formed by a surface orientated substantially perpendicular to the longitudinal axis A and arranged to abut a cooperating stop surface of the tube fitting 2, such as a flange or rim 24 or the like, once the cap 1 is placed over the socket 20 too far or substantially far enough such that the cap 1 is correctly attached to the tee 2, i.e. in the correct position.

By attaching the tubular cover 1 to the tube fitting 2 after securing the tube fitting 2 to the formwork 4, the tube fitting 2 can be secured more conveniently, since the tube fitting 2 is then easily accessible. Nonetheless, an alternative sequence of steps can be followed.

In a fourth step, concrete is poured onto the formwork 4 to form a concrete floor 3 having a thickness T exceeding the height of the tee 2, thereby extending further than the tee 2 as seen from the formwork 4. The cap 1 extending upwards from the tee 2 has a segment 1a protruding beyond the poured concrete floor 3 and a segment 1b submerged in the floor 3. Along the longitudinal axis A, the tubular section 11, in particular the submerged segment 1b, has an inner diameter d1 exceeding an inner diameter d2 of the tee 2, in particular of the socket 20 to allow a tube to be received in the tubular section 11 in order to be coupled to the tee 2, as illustrated further below.

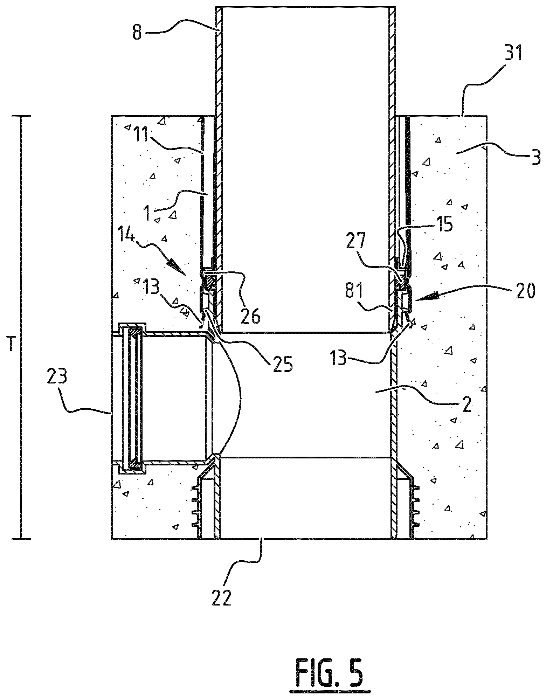

In a fifth step, the cap 1 is adjusted by removing, and disposing, the protruding segment 1a of the cap 1. Alternatively, only the closing member 12 is removed. It is however preferred if the remainder of the tubular section 11 of the cap 1 is flush with the surface 31 of the concrete floor 3 after adjusting the cap 1. In other words, preferably only the submerged segment 1b remains. This is visible in figure 5.

In a sixth step, and also with reference to figure 5, a tube 8 of a tube system can be coupled to the tee 2. Thereto, the socket 20 of the tee 2 is provided with an annular groove 26 along the interior of the socket 20, in which a sealing ring 27 can be arranged (see also figure 2). As shown, the groove 26 defines the circumferential rim 24. As an alternative to the flange 25 being engaged by the locking parts 13, the locking parts 13 may engage the rim 24 such that the additional flange 25 is not required. The tube 8 can be inserted from the space above the concrete floor 3 into the remainder of the tubular section 11, after which a spigot end 81 of the tube 8 can form a connection with the socket 20 of the tee 2.

Figures 3 and 4 show embodiments of the tubular cover 1 as alternatives to the cap 1 shown in figures 1 and 2. To enhance its structural strength and/or rigidity, the cover 1 is preferably provided with reinforcement structures 16 in the structure of the cover 1, particularly the tubular section 11 thereof, such as ribs, gussets or corrugations, arranged longitudinally, circumferentially or otherwise. This way, the tubular cover 1 can withstand forces exerted by concrete that is being poured.

The above description of the attached drawings is provided merely for illustrative purposes to contribute to comprehension of the present invention, which is defined by the claims, and is not intended to limit the scope of the appended claims in any way or form.

## Claims

1. Method of adapting a tube fitting (2) to a poured concrete floor (3), wherein the method comprises the steps of:
- providing a tube fitting assembly (100) for use in a tube system extending through the poured concrete floor (3), the tube fitting assembly (100) comprising:
a tube fitting (2), comprising a connection end (20) for coupling to a tube (8) of the tube system, and
a tubular cover (1), wherein the tubular cover (1) and the tube fitting (2) comprise mutually cooperating connection means (13, 14, 24, 25) attaching the tubular cover (1) to the tube fitting (2);
- providing the poured concrete floor (3), wherein the tube fitting (2) and the tubular cover (1) are installed therein, wherein the tubular cover (1) axially extends from the connection end (20) in a direction away from the tube fitting (2) through a surface (31) of the concrete floor (3);
**characterised in that** the tubular cover is coaxially arranged around the connection end (20), and **by** the step of adjusting a height of the tubular cover (1) on the basis of a thickness (T) of the concrete floor (3) subsequent to the step of providing the poured concrete floor (3).

2. Method according to claim 1, wherein the floor thickness exceeds the height of the tube fitting.

3. Method according to claim 1 or 2, wherein the step of adjusting the height of the tubular cover (1) comprises the step of removing a segment (1a) of the tubular cover (1).

4. Method according to claim 3, wherein the segment (1a) of the tubular cover (1) is a segment protruding beyond the surface (31) of the poured concrete floor (3).

5. Method according to claim 1, 2, 3 or 4, further comprising the step of providing formwork (4) and optionally reinforcement material for the concrete floor (3), wherein the step of providing the tube fitting assembly (100) comprises the step of positioning the tube fitting (2) on the formwork (4) and/or reinforcement material, which step comprises securing the tube fitting (2) to the formwork (4) and/or reinforcement material, which step comprises pressing the tube fitting (2) down against the formwork (4) using a bracket (7), wherein the bracket (7) is coupled to the formwork (4) using a rod or a bolt.

6. Method according to any one of the preceding claims, further comprising the steps of inserting a tube (8) into the tubular cover (1) and coupling the inserted tube (8) to the tube fitting (2).

7. Method according to any of the preceding claims 1 - 5 or to at least claims 3 and 6, wherein the tubular cover (1) comprises a closed end, wherein the step of adjusting the height of the tubular cover (1) comprises the step of removing the segment (1a) of the tubular cover (1) comprising the closed end.

8. Tube fitting assembly (100) for use in a tube system extending through a concrete floor (3), wherein the tube fitting assembly (100) comprises:
- a tube fitting (2), comprising a connection end (20) for coupling to a tube (8) of the tube system;
- a tubular cover (1), wherein the tubular cover (1) is coaxially arranged around the connection end (20) and arranged to axially extend from the connection end (20) in a direction away from the tube fitting (2),
wherein the tubular cover (1) and the tube fitting (2) comprise mutually cooperating connection means (13, 14, 24, 25) arranged to attach the tubular cover (1) to the tube fitting (2), the mutually cooperating connection means (13, 14, 24, 25) comprising one or more parts (24, 25) provided on the tube fitting (2) and one or more parts (13) provided on the tubular cover (1) and arranged to interlock with the one or more parts (24, 25) provided on the tube fitting (2), **characterised in that** the connection means (24, 25) of the tube fitting (2) comprise a flange (25), wherein the one or more locking parts (13) on the tubular cover (1) are arranged circumferentially around the open end and are, with respect to the longitudinal axis (A) of the tubular cover (1), radially movable for coaxially arranging the tubular cover (1) around the connection end (20), wherein the one or more locking parts (13) on the tubular cover (1) are arranged for engaging the flange (25) to attach the tubular cover (1) to the flange (25).

9. Tube fitting assembly according to claim 8, wherein the tubular cover (1) is monolithic.

10. Tube fitting assembly according to claim 8 or 9, wherein the tubular cover (1) comprises a tubular section (11), defining a longitudinal axis (A) of the tubular cover (1), wherein the connection means (14) of the tubular cover (1) is provided at an open end of the tubular section (11) for coaxially attaching the tubular cover (1) to the connection means (24, 25) of the tube fitting (2).

11. Tube fitting assembly according to claim 10, wherein the tubular section (11) comprises a disposable closed end opposite to the open end.

12. Tube fitting assembly according to claims 8-11, wherein an inner diameter (d1) of the tubular cover (1) exceeds an inner diameter (d2) of the tube fitting (2).

13. Tube fitting assembly according to claim 12, wherein the connection means (13, 14, 24, 25) are arranged to attach the tubular cover (1) to an exterior of the connection end (20).

14. Tube fitting assembly according to claim 13, wherein the connection means (13, 14) of the tubular cover (1) comprise a sealing region (14) formed by a reduction of an inner diameter (d1) of the tubular cover (1), as seen along a longitudinal axis (A) of the tubular cover (1), wherein the sealing region (14) is arranged to abut an exterior region (24) of the connection end (20).

## Patentansprüche

1. Verfahren zum Anpassen einer Rohrverbindung (2) an einen gegossenen Betonboden (3), wobei das Verfahren die folgenden Schritte umfasst:
- Bereitstellen einer Rohrverbindungsanordnung (100) zur Verwendung in einem Rohrsystem, das sich durch den gegossenen Betonboden (3) erstreckt, wobei die Rohrverbindungsanordnung (100) umfasst:
eine Rohrverbindung (2), die ein Anschlussende (20) zum Anschließen an ein Rohr (8) des Rohrsystems umfasst, und
eine rohrförmige Abdeckung (1), wobei die rohrförmige Abdeckung (1) und die Rohrverbindung (2) miteinander zusammenwirkende Verbindungsmittel (13, 14, 24, 25) umfassen, die die rohrförmige Abdeckung (1) an der Rohrverbindung (2) befestigen;
- Bereitstellen des gegossenen Betonbodens (3), wobei die Rohrverbindung (2) und die rohrförmige Abdeckung (1) darin installiert sind, wobei sich die rohrförmige Abdeckung (1) axial vom Anschlussende (20) in eine Richtung weg von der Rohrverbindung (2) durch eine Oberfläche (31) des Betonbodens (3) erstreckt;
**dadurch gekennzeichnet, dass** die rohrförmige Abdeckung koaxial um das Verbindungsende (20) angeordnet ist, und durch den Schritt des Anpassens einer Höhe der rohrförmigen Abdeckung (1) auf der Grundlage einer Dicke (T) des Betonbodens (3) im Anschluss an den Schritt des Bereitstellens des gegossenen Betonbodens (3).

2. Verfahren nach Anspruch 1, wobei die Bodendicke die Höhe der Rohrverbindung übersteigt.

3. Verfahren nach Anspruch 1 oder 2, wobei der Schritt des Einstellens der Höhe der rohrförmigen Abdeckung (1) den Schritt des Entfernens eines Segments (1a) der rohrförmigen Abdeckung (1) umfasst.

4. Verfahren nach Anspruch 3, wobei das Segment (1a) der rohrförmigen Abdeckung (1) ein Segment ist, das über die Oberfläche (31) des gegossenen Betonbodens (3) hinausragt.

5. Verfahren nach Anspruch 1, 2, 3 oder 4, das ferner den Schritt des Bereitstellens einer Schalung (4) und optional von Bewehrungsmaterial für den Betonboden (3) umfasst, wobei der Schritt des Bereitstellens der Rohrverbindungsanordnung (100) den Schritt des Positionierens der Rohrverbindung (2) auf der Schalung (4) und/oder dem Bewehrungsmaterial umfasst, wobei dieser Schritt das Befestigen der Rohrverbindung (2) an der Schalung (4) und/oder dem Bewehrungsmaterial umfasst, wobei dieser Schritt das Herunterdrücken der Rohrverbindung (2) gegen die Schalung (4) unter Verwendung einer Halterung (7) umfasst, wobei die Halterung (7) unter Verwendung einer Stange oder eines Bolzens mit der Schalung (4) verbunden ist.

6. Verfahren nach einem der vorstehenden Ansprüche, ferner umfassend die Schritte des Einführens eines Rohrs (8) in die rohrförmige Abdeckung (1) und des Koppelns des eingeführten Rohrs (8) mit der Rohrverbindung (2).

7. Verfahren nach einem der vorstehenden Ansprüche 1 bis 5 oder zumindest nach den Ansprüchen 3 und 6, wobei die rohrförmige Abdeckung (1) ein geschlossenes Ende umfasst, wobei der Schritt des Einstellens der Höhe der rohrförmigen Abdeckung (1) den Schritt des Entfernens des Segments (1a) der rohrförmigen Abdeckung (1) mit dem geschlossenen Ende umfasst.

8. Rohrverbindungsanordnung (100) zur Verwendung in einem Rohrsystem, das sich durch einen Betonboden (3) erstreckt, wobei die Rohrverbindungsanordnung (100) umfasst:
- eine Rohrverbindung (2), die ein Anschlussende (20) zum Anschließen an ein Rohr (8) des Rohrsystems umfasst;
- eine rohrförmige Abdeckung (1), wobei die rohrförmige Abdeckung (1) koaxial um das Anschlussende (20) angeordnet ist und sich axial vom Anschlussende (20) in eine Richtung weg von der Rohrverbindung (2) erstreckt, wobei die rohrförmige Abdeckung (1) und die Rohrverbindung (2) miteinander zusammenwirkende Verbindungsmittel (13, 14, 24, 25) umfassen, die dazu dienen, die rohrförmige Abdeckung (1) an der Rohrverbindung (2) zu befestigen, wobei die miteinander zusammenwirkenden Verbindungsmittel (13, 14, 24, 25) ein oder mehrere Teile (24, 25) umfassen, die an der Rohrverbindung (2) vorgesehen sind, und ein oder mehrere Teile (13), die an der rohrförmigen Abdeckung (1) vorgesehen sind und dazu dienen, mit dem einen oder den mehreren Teilen (24, 25) an der Rohrverbindung (2) ineinanderzugreifen, **dadurch gekennzeichnet, dass** die Verbindungsmittel (24, 25) der Rohrverbindung (2) einen Flansch (25) umfassen, wobei das eine oder die mehreren Verriegelungsteile (13) an der rohrförmigen Abdeckung (1) umlaufend um das offene Ende angeordnet sind und in Bezug auf die Längsachse (A) der rohrförmigen Abdeckung (1) radial beweglich sind, um die rohrförmige Abdeckung (1) koaxial um das Verbindungsende (20) anzuordnen, wobei das eine oder die mehreren Verriegelungsteile (13) an der rohrförmigen Abdeckung (1) zum Eingreifen in den Flansch (25) angeordnet sind, um die rohrförmige Abdeckung (1) an dem Flansch (25) zu befestigen.

9. Rohrverbindungsanordnung nach Anspruch 8, wobei die rohrförmige Abdeckung (1) monolithisch ist.

10. Rohrverbindungsanordnung nach Anspruch 8 oder 9, wobei die rohrförmige Abdeckung (1) einen rohrförmigen Abschnitt (11) umfasst, der eine Längsachse (A) der rohrförmigen Abdeckung (1) definiert, wobei das Verbindungsmittel (14) der rohrförmigen Abdeckung (1) an einem offenen Ende des Rohrabschnitts (11) vorgesehen ist, um die rohrförmigen Abdeckung (1) koaxial an dem Verbindungsmittel (24, 25) der Rohrverbindung (2) zu befestigen.

11. Rohrverbindungsanordnung nach Anspruch 10, wobei der rohrförmige Abschnitt (11) gegenüber dem offenen Ende ein geschlossenes Einwegende umfasst.

12. Rohrverbindungsanordnung nach Anspruch 8 bis 11, wobei ein Innendurchmesser (d1) der rohrförmigen Abdeckung (1) größer ist als ein Innendurchmesser (d2) der Rohrverbindung (2).

13. Rohrverbindungsanordnung nach Anspruch 12, wobei die Verbindungsmittel (13, 14, 24, 25) dazu dienen, die rohrförmige Abdeckung (1) an einer Außenseite des Verbindungsendes (20) zu befestigen.

14. Rohrverbindungsanordnung nach Anspruch 13, wobei die Verbindungsmittel (13, 14) der rohrförmigen Abdeckung (1) einen Dichtungsbereich (14) umfassen, der durch eine Verringerung eines Innendurchmessers (d1) der rohrförmigen Abdeckung (1) gebildet wird, gesehen entlang einer Längsachse (A) der rohrförmigen Abdeckung (1), wobei der Dichtungsbereich (14) so angeordnet ist, dass er an einem Außenbereich (24) des Verbindungsendes (20) anliegt.

## Revendications

1. Procédé d'adaptation d'un raccord de tubes (2) à un sol en béton coulé (3), dans lequel le procédé comprend les étapes consistant à :
- fournir un ensemble raccord de tubes (100) à utiliser dans un système de tubes s'étendant à travers le sol en béton coulé (3), l'ensemble raccord de tubes (100) comprenant :
un raccord de tubes (2), comprenant une extrémité de liaison (20) pour accouplement à un tube (8) du système de tubes, et
un couvercle tubulaire (1), dans lequel le couvercle tubulaire (1) et le raccord de tubes (2) comprennent des moyens de liaison coopérant entre eux (13, 14, 24, 25) fixant le couvercle tubulaire (1) au raccord de tubes (2) ;
- fournir le sol en béton coulé (3), dans lequel le raccord de tubes (2) et le couvercle tubulaire (1) sont installés dans celui-ci, dans lequel le couvercle tubulaire (1) s'étend axialement à partir de l'extrémité de liaison (20) dans une direction opposée au raccord de tubes (2) à travers une surface (31) du sol en béton (3) ;
**caractérisé en ce que** le couvercle tubulaire est disposé coaxialement autour de l'extrémité de liaison (20), et par l'étape consistant à ajuster une hauteur du couvercle tubulaire (1) sur la base d'une épaisseur (T) du sol en béton (3) après l'étape consistant à fournir le sol en béton coulé (3).

2. Procédé selon la revendication 1, dans lequel l'épaisseur du sol dépasse la hauteur du raccord de tubes.

3. Procédé selon la revendication 1 ou 2, dans lequel l'étape consistant à ajuster la hauteur du couvercle tubulaire (1) comprend l'étape consistant à retirer un segment (1a) du couvercle tubulaire (1).

4. Procédé selon la revendication 3, dans lequel le segment (1a) du couvercle tubulaire (1) est un segment dépassant de la surface (31) du sol en béton coulé (3).

5. Procédé selon la revendication 1, 2, 3 ou 4, comprenant en outre l'étape consistant à fournir un coffrage (4) et éventuellement un matériau de renforcement pour le sol en béton (3), dans lequel l'étape consistant à fournir l'ensemble raccord de tubes (100) comprend l'étape consistant à positionner le raccord de tubes (2) sur le coffrage (4) et/ou le matériau de renforcement, laquelle étape consiste à fixer le raccord de tubes (2) au coffrage (4) et/ou au matériau de renforcement, laquelle étape consiste à presser le raccord de tubes (2) vers le bas contre le coffrage (4) à l'aide d'un support (7), dans lequel le support (7) est accouplé au coffrage (4) à l'aide d'une tige ou d'un boulon.

6. Procédé selon l'une quelconque des revendications précédentes, comprenant en outre les étapes consistant à insérer un tube (8) dans le couvercle tubulaire (1) et à accoupler le tube inséré (8) au raccord de tubes (2).

7. Procédé selon l'une quelconque des revendications 1 à 5 précédentes ou au moins les revendications 3 et 6, dans lequel le couvercle tubulaire (1) comprend une extrémité fermée, dans lequel l'étape consistant à ajuster la hauteur du couvercle tubulaire (1) comprend l'étape consistant à retirer le segment (1a) du couvercle tubulaire (1) comprenant l'extrémité fermée.

8. Ensemble raccord de tubes (100) destiné à être utilisé dans un système de tubes s'étendant à travers un sol en béton (3), dans lequel l'ensemble raccord de tubes (100) comprend :
- un raccord de tubes (2), comprenant une extrémité de liaison (20) pour l'accouplement à un tube (8) du système de tubes ;
- un couvercle tubulaire (1), dans lequel le couvercle tubulaire (1) est disposé coaxialement autour de l'extrémité de liaison (20) et conçu pour s'étendre axialement à partir de l'extrémité de liaison (20) dans une direction opposée au raccord de tubes (2),
dans lequel le couvercle tubulaire (1) et le raccord de tubes (2) comprennent des moyens de liaison coopérant entre eux (13, 14, 24, 25) conçus pour fixer le couvercle tubulaire (1) au raccord de tubes (2), les moyens de liaison coopérant entre eux (13, 14, 24, 25) comprenant une ou plusieurs parties (24, 25) prévues sur le raccord de tubes (2) et une ou plusieurs parties (13) prévues sur le couvercle tubulaire (1) et conçues pour s'emboîter avec la ou les parties (24, 25) prévues sur le raccord de tubes (2), **caractérisés en ce que** les moyens de liaison (24, 25) du raccord de tubes (2) comprennent une bride (25), dans lequel la ou les parties de verrouillage (13) sur le couvercle tubulaire (1) sont disposées circonférentiellement autour de l'extrémité ouverte et sont, par rapport à l'axe longitudinal (A) du couvercle tubulaire (1), radialement mobiles pour disposer coaxialement le couvercle tubulaire (1) autour de l'extrémité de liaison (20), dans lequel la ou les parties de verrouillage (13) sur le couvercle tubulaire (1) sont conçues pour entrer en prise avec la bride (25) afin de fixer le couvercle tubulaire (1) à la bride (25).

9. Ensemble raccord de tubes selon la revendication 8, dans lequel le couvercle tubulaire (1) est monolithique.

10. Ensemble raccord de tubes selon la revendication 8 ou 9, dans lequel le couvercle tubulaire (1) comprend une section tubulaire (11), définissant un axe longitudinal (A) du couvercle tubulaire (1), dans lequel le moyen de liaison (14) du couvercle tubulaire (1) est fourni au niveau d'une extrémité ouverte de la section tubulaire (11) pour fixer coaxialement le couvercle tubulaire (1) au moyen de liaison (24, 25) du raccord de tubes (2).

11. Ensemble raccord de tubes selon la revendication 10, dans lequel la section tubulaire (11) comprend une extrémité fermée jetable en regard de l'extrémité ouverte.

12. Ensemble raccord de tubes selon les revendications 8 à 11, dans lequel un diamètre intérieur (d1) du couvercle tubulaire (1) dépasse un diamètre intérieur (d2) du raccord de tubes (2).

13. Ensemble raccord de tubes selon la revendication 12, dans lequel les moyens de liaison (13, 14, 24, 25) sont conçus pour fixer le couvercle tubulaire (1) à une partie extérieure de l'extrémité de liaison (20).

14. Ensemble raccord de tubes selon la revendication 13, dans lequel les moyens de liaison (13, 14) du couvercle tubulaire (1) comprennent une région d'étanchéité (14) formée par une réduction d'un diamètre intérieur (d1) du couvercle tubulaire (1), vu le long d'un axe longitudinal (A) du couvercle tubulaire (1), dans lequel la région d'étanchéité (14) est conçue pour buter sur une région extérieure (24) de l'extrémité de liaison (20).
